# EUROPEAN PATENT SPECIFICATION

(11) **EP 3 815 530 B1**
(45) Date of publication and mention of the grant of the patent: **17.01.2024**
(21) Application number: 20203794.1
(22) Date of filing: 26.10.2020
(51) Int. Cl.: A01N 25/00, A01N 31/02, A01N 37/02, A01P 19/00

(54) **METHOD FOR CONTROLLING BEET ARMYWORM**
VERFAHREN ZUR BEKÄMPFUNG DES RÜBENHEERWURMS
PROCÉDÉ DE RÉGULATION DU LÉGIONNAIRE DE LA BETTERAVE

(30) Priority: 30.10.2019 JP 2019197797
(43) Date of publication of application: 05.05.2021
(73) Proprietor: Shin-Etsu Chemical Co., Ltd., Tokyo 100-0004 (JP)
(72) Inventor: OHNO, Erina, Joetsu-shi, Niigata 942-8601 (JP); KUTSUWADA, Yasuhiko, Joetsu-shi, Niigata 942-8601 (JP)
(74) Representative: De Vries & Metman

(56) References cited:
- CN-A- 106 900 705
- JP-A- 2018 024 622
- JP-A- 2020 066 601
- JUNG C R ET AL: "Optimal Sex Pheromone Composition for Monitoring Spodoptera exigua (Lepidoptera: Noctuidae) in Korea", JOURNAL OF ASIA PACIFIC ENTOMOLOGY, KOREAN SOCIETY OF APPLIED ENTOMOLOGY, SUWON, KR, vol. 6, no. 2, 1 November 2003 (2003-11-01), pages 175-182, XP025803339, ISSN: 1226-8615, DOI: 10.1016/S1226-8615(08)60183-1 [retrieved on 2003-11-01]

## Description

### BACKGROUND OF THE INVENTION

### 1. Field of the Invention

The invention relates to a method for conrolling a beet armyworm.

### 2. Related Art

A beet armyworm (Spodoptera exigua) is known to have a broad range of hosts and is identified in most areas where the hosts grow. Farm products to be harmed by the beet armyworm include vegetables, potatoes, beans, and flowers.

Control of a larva of the beet armyworm by general drugs is considered to be difficult because it is not sensitive to various types of drugs and, especially in regard with alliums, the larva is lurked in a cylindrical space formed by a leaf. Therefore, mating disruption by using the sex pheromone substances (Z,E)-9,12-tetradecadienyl acetate and (Z)-9-tetradecenol is known as an effective control method (Wakamura et al., Applied Entomology and Zoology, Vol. 24, Page 387-397 (1989)).

A pheromone preparation for mating disruption is commonly fixed to a plant body, a prop or the like, or mounted in an air, while preventing the preparation from making contact with the soil surface as much as possible. It is because of avoiding the adsorption of a pheromone substance to the soil and avoiding the decomposition of the pheromone substance by soil microorganisms.

Regarding the beet armyworm, an optimal height at which a pheromone trap is installed is known to be 1. 5 m above the ground. Thus, it is considered to be efficient to release a pheromone substance from a pheromone preparation at a position higher than the soil surface. JUNG C R ET AL: "Optimal Sex Pheromone Composition for Monitoring Spodoptera exigua (Lepidoptera: Noctuidae) in Korea", JOURNAL OF ASIA PACIFIC ENTOMOLOGY, vol. 6, no. 2, pages 175-182, as well as CN106900705 recommend placing the lure sensibly above ground.

### SUMMARY OF THE INVENTION

However, installation of a pheromone preparation becomes inconvenient as the field area increases because the installation requires equipment such as a prop to allow a pheromone substance to be easily released. Such installation is also disadvantageous from the viewpoint of cost.

The invention has been made in view of the above circumstances. An object of the invention is to provide a method for controlling a beet armyworm, wherein the method does not require consideration of the height of a plant body and the ecology of the beet armyworm.

As a result of intensive study to achieve the above object, the inventors have found that, contrary to the above, even if a pheromone preparation comprising a pheromone substance for the beet armyworm is placed on the soil surface and/or a surface of a material covering the soil surface, the beet armyworm can be efficiently controlled; and they have completed the invention.

In one aspect of the invention, there is provided a method for controlling a beet armyworm, the method comprising a step of installing at least one pheromone preparation comprising a pheromone substance for the beet armyworm and a container containing the pheromone substance therein and allowing the pheromone substance to permeate therethrough, on a soil surface and/or a surface of a material covering a soil surface in a field to release the pheromone substance into the field.

According to the invention, since the pheromone preparation is installed on the soil surface and/or the surface of the material covering the soil surface, it is possible to efficiently and economically control the beet armyworm without considering the ecology of the beet armyworm, and to suppress the emergence of the next generation of the beet armyworm.

### DETAILED DESCRIPTION OF THE PREFERRED EMBODIMENTS

First, there will be described a step of installing at least one pheromone preparation comprising a pheromone substance for the beet armyworm and a container containing the pheromone substance therein and allowing the pheromone substance to permeate therethrough, on a soil surface and/or a surface of a material covering a soil surface in a field to release the pheromone substance into the field.

Examples of the pheromone substance for the beet armyworm include a sex pheromone substance such as (Z,E)-9,12-tetradecadienyl acetate, (Z)-9-tetradecenol, (Z,E)-9,12-tetradecadienol, (Z)-9-tetradecenyl acetate, and (Z)-11-hexadecenyl acetate. The pheromone substance for the beet armyworm includes not only a compound actually extracted from the beet armyworm, but also an industrially synthesized compound which is the same as the extracted compound. The pheromone substance is preferably an industrially synthesized compound from the viewpoint of economy. In addition, the pheromone substance for the beet armyworm may contain an impurity which is unavoidable in the synthesis of the pheromone substance.

Further, a pheromone substance for the beet armyworm may be used singly or in combination of two or more types. For example, when (Z,E)-9,12-tetradecadienyl acetate and (Z)-9-tetradecenol are used in combination, the mixing ratio (weight ratio) of (Z,E)-9,12-tetradecadienyl acetate to (Z)-9-tetradecenol is preferably from 99:1 to 1:99, more preferably from 99:1 to 50:50, and still more preferably from 80:20 to 60:40, from the viewpoint of the reported natural composition.

The pheromone substance for the beet armyworm may be mixed with an optional additive such as a diluent, a polymerization inhibitor, an antioxidant and an ultraviolet absorber. Two or more types of the optional additive may be used in combination. A commercially available additive may be used.

Examples of the diluent include dodecyl acetate, tetradecyl acetate, hexadecyl acetate, 1-dodecanol, 1-tetradecanol, and 1-hexadecanol.

Examples of the polymerization inhibitor include 2,2'-methylenebis(4-methyl-6-t-butylphenol).

Examples of the antioxidant include 2,6-di-butyl-4-methylphenol, butylhydroxytoluene, butylhydroxyanisole, hydroquinone, and vitamin E.

Examples of the ultraviolet absorber include 2-(2'-hydroxy-3'-tert-butyl-5'-methylphenyl)-5-chlorobenzotriazole, 2-hydroxy-4-octoxybenzophenone, 2-(3,5-di-t-butyl-2-hydroxyphenyl)-5-chlorobenzotriazole, and 2,5 '-di-t-butylhydroquinone.

The amount of each optional additive varies depending on the environment of use and the like. It is preferably from 0.1 to 8.0 parts by weight relative to 100 parts by weight of the pheromone substance for the beet armyworm.

The container which the pheromone preparation comprises is not particularly limited as long as it can releasably store the pheromone substance for the beet armyworm. The container is preferably made of a polymer. In order to allow the pheromone substance stored in the container to be released into a field, at least a part of the container may be made of a polymer through which the pheromone substance can permeate. All of the container is preferably made of a polymer through which the pheromone substance can permeate.

The type of the polymer is not particularly limited as long as a pheromone substance for the beet armyworm can permeate through the polymer. Examples of the polymer include a polyolefin-based plolymer, a biodegradable polymer, and a disintegrable polymer. The biodegradable polymer is preferable from the viewpoint of omitting the time and labor for recovering the pheromone preparation installed on the soil surface and/or the surface of the material covering the soil surface. The polymer may be used singly or in combination of two or more types. The polymer may be a commercially available polymer, or a synthesized polymer.

Examples of the polyolefin-based polymer include polyethylene, polypropylene, and an ethylene-vinyl acetate copolymer.

The content of the vinyl acetate unit, which is a repeating unit derived from vinyl acetate in the ethylene-vinyl acetate copolymer, is preferably from 0.5 to 10% by weight, more preferably from 0.5 to 6% by weight, and still more preferably from 0.5 to 3% by weight, from the viewpoint of release performance and processability. The content of the vinyl acetate unit, which is a repeating unit derived from vinyl acetate in the ethylene-vinyl acetate copolymer, may be measured by infrared spectroscopy (IR) using a standard ethylene-vinyl acetate copolymer sample having the known content of vinyl acetate unit. The weight-average molecular weight (Mw) of the ethylene-vinyl acetate copolymer is not particularly limited. It is preferably from 50,000 to 500,000 from the viewpoint of release performance and processability. The weight-average molecular weight (Mw) of the ethylene-vinyl acetate copolymer may be measured by gel permeation chromatography (GPC) by using polystyrene as a standard.

The biodegradable polymer is an enzymatically degradable polymer that will be completely degraded by microorganisms in soil. Examples of the biodegradable polymer include an aliphatic polyester-based thermoplastic polymer such as a condensation polymer made from at least one type of dicarboxylic acid selected from oxalic acid, malonic acid, succinic acid, glutaric acid, adipic acid, sebacic acid, fumaric acid, maleic acid and terephthalic acid, and at least one type of polyol selected from ethylene glycol, propanediol, butanediol, pentanediol, hexanediol, heptanediol, octanediol and decanediol; a condensation polymer made from at least one selected from lactic acid, hydroxyvaleric acid, hydroxycaproic acid and hydroxycapric acid; and a polycaprolactone obtained by ring-opening polymerization of an ε-caprolactone.

Specific examples of the biodegradable polymer include polyesters such as polyethylene adipate, polyethylene succinate, polybutylene adipate, polybutylene succinate, polybutylene terephthalate, polylactic acid, poly-3-hydroxybutyrate, and poly-3-hydroxyhexanoate; and copolymers containing one or more of said polyesters, preferably two or more of said polyesters, such as polybutylene adipate succinate, polybutylene adipate terephthalate, polyethylene terephthalate succinate, and poly-3-hydroxybutyrate-3-hydroxyhexanoate.

Regarding a copolymer containing an aliphatic polyester-based thermoplastic polymer as a main component, a monomer unit for forming an aliphatic polyester-based thermoplastic polymer is contained in an amount of 50% by weight or more in the total monomer units. Regarding a blend polymer containing an aliphatic polyester-based thermoplastic polymer as a main component, a fatty acid polyester-based thermoplastic polymer is contained in an amount of 50% by weight or more in the total polymers (i.e. two or more types of polymers) to be blended.

The disintegrating polymer is an oxidative decomposition type polymer which will slowly disintegrate due to microorganisms of soil, ultraviolet rays, or the like. Examples of the disintegrating polymer include a mixture of polyethylene, polypropylene, nylon, polystyrene, polyvinyl chloride, polyvinyl acetate, or a copolymer containing one or more of said preceding examples, with a biodegradable component and/or a decomposition accelerator.

Examples of the biodegradable component include starch extracted from at least one selected from the group consisting of potato, rice, tapioca, corn, rye, barley, and wheat.

Examples of the decomposition accelerator include transition metal compounds such as dithiocarbamates; rare earth compounds such as cerium oxide; and aromatic ketones such as benzophenone.

The container which the pheromone preparation comprises is not particularly limited as long as it can stably hold a pheromone substance for the beet armyworm and can release the pheromone substance into the atmosphere. Examples of the container include a tube, a laminated bag, a capsule, a bottle, and an ampoule.

The container which a pheromone preparation comprises is preferably a tube from the viewpoint of uniformity in the release of a pheromone substance for the beet armyworm. The tube has an inner diameter of preferably from 0.5 to 2.5 mm, more preferably from 1.0 to 2.0 mm; a surface area of preferably from 20 to 350,000 mm², more preferably from 20 to 3,000 mm², still more preferably from 20 to 650 mm²; and a thickness of preferably from 0.2 to 1.0 mm, more preferably from 0.2 to 0.4 mm. The length of the tube container is not particularly limited. It is preferably from 0.5 to 100,000 cm, more preferably from 0.5 to 50 cm. It is still more preferably from 0.5 to 5.0 cm, and particularly preferably from 1.5 to 2.5 cm, in consideration of its portability for installing the pheromone preparation on the soil surface and/or the surface of the material covering the soil surface.

The amount of the pheromone substance to be held in the pheromone preparation is preferably from 0.5 to 50,000 mg, more preferably from 2 to 300 mg, and still more preferably from 4 to 40 mg, per pheromone preparation, from the viewpoint of the dosage per unit area and the number of the pheromone preparations installed.

In addition, the pheromone preparation is preferably a sustained release preparation from the viewpoint of ensuring release of the pheromone substance throughout the emergence period of the beet armyworm.

The pheromone preparations are preferably uniformly installed in the field from the viewpoint of uniformity in the concentration of the pheromone substance released into the field. The installation density of the pheromone preparations is preferably from 3 to 20,000 preparations/ha, more preferably from 100 to 10,000 preparations/ha, still more preferably from 200 to 7000 preparations/ha, and particularly preferably from 700 to 3500 preparations/ha, on the soil surface and/or the surface of the material covering the soil surface from the viewpoint of the dosage per unit area and the release amount of the pheromone substance.

The release period of the pheromone preparation can be adjusted by appropriately selecting the shape of the container of the pheromone preparation, the amount of the pheromone substance carried by the container, the amount of the pheromone substance released and the release rate described later. Since the release duration in the field may vary under the influence of the weather environment, whether or not the pheromone preparation is appropriately functioning may be checked by using tire pheromone trap, and a new pheromone preparation may be installed in the field as necessary.

Regarding the installation of pheromone preparations on the soil surface and/or the surface of the material covering the soil surface, there has been a conventional concern about the influence of the soil on the release of pheromone component. For example, there have been concerns about adsorption of pheromone component on the soil and/or the material covering the soil surface, fungi growth and soil adsorption on the surface of the pheromone preparation, and decomposition by soil bacteria and the like of the pheromone preparation container made of a biodegradable polymer or a disintegrating polymer. However, as described more specifically in Examples below, this time when the pheromone preparations were installed on the soil surface and/or the surface of the material covering the soil surface, the residual ratio of the pheromone was more than 45% even after about 2 months. Thus, it is evident that the installation of the pheromone preparation on the soil surface and/or the surface of the material covering the soil surface can be used without any problem in comparison with the installation of the pheromone preparation in the air.

As used herein, "installing a pheromone preparation on a soil surface and/or a surface of the material covering the soil surface in a field" refers to installing the pheromone preparation directly on the soil surface and/or indirectly on the soil surface via the material covering the soil surface. Examples of the material covering the soil surface include mulching sheets, reflective sheets, weed-proof sheets, weed-proof mats, rice straws, miscanthus (or zebra grass), rice hulls, wood chips, weeds, mountain weeds, and wild grasses.

The area ratio of the soil surface to the surface of the material covering the soil surface in the field is not particularly limited. It is preferably from 100:0 to 0:100, more preferably from 90:10 to 50:50.

When the container which the pheromone preparation comprises is a tube, for example, the tube may stand vertically or lie down horizantally with respect to the soil surface or the surface of the material covering the soil surface.

Although an amount of the pheromone substance for the beet armyworm to be released is difficult to be generally specified because of dependency on the field environment, weather conditions and the like, it is not particularly limited. It is preferably from 0.03 to 2 glhalday, more preferably from 0.03 to 1.5 glhalday, from the viewpoint of the dosage per unit area and the installation number of the pheromone preparations. In particular, it has been found that it is possible to control the beet armyworm even at a smaller release amount of still more preferably 0.045 to 0.30 glhalday, by the installation on the soil surface and/or on the surface of the material covering the soil surface.

The release rate per pheromone preparation at 25°C and a wind speed of 0.3 m/sec is preferably 0.01 to 4 mg/day/preparation, more preferably 0.01 to 1.5 mg/day/preparation, still more preferably 0.03 to 0.20 mg/day/preparation, and further still more preferably 0.05 to 0.10 mg/day/preparation from the viewpoint of the number of installed pheromone preparations.

The release rate of the pheromone substance for the beet armyworm from the pheromone preparation may be adjusted, for example, by the addition of a diluent to the pheromone substance, or by selection of the material or shape of the container (in the case of a tube container, for example, selection of the inner diameter, surface area, thickness or length of the tube).

Examples of the farm products which are produced in the field and which the beet armyworms do harm, include the family Solanaceae such as an eggplant, a tomato, a green pepper and a sweet pepper; the family Malvaceae such as an okra and a mulukhiyya; the family Cucurbitaceae such as a cucumber, a pumpkin and a zucchini; the family Brassicaceae such as a cabbage; the family Fabaceae such as a soybean; the subfamily Allioideae such as a green onion and an onion; the family Amaranthaceae such a spinach; the family Lamiaceae such as a perilla; the family Apiaceae such as a carrot; the family Asteraceae such as a lettuce; the family Dioscoreaceae such as a Chinese yam; the family Asparagaceae such as an asparagus; a strawberry; and flowers.

As described above, there is provided a method for controlling a beet army worm, by installing at least one pheromone preparation comprising a pheromone substance for the beet armyworm on a soil surface and/or a surface of the material covering the soil surface in a field.

### EXAMPLES

Hereinafter, the invention will be described more specifically with reference to Examples and Comparative Examples.

### <Production of Pheromone Preparation A>

The 18.8 mg of a mixture of (Z,E)-9,12-tetradecadienyl acetate and (Z)-9-tetradecenol at a weight ratio of 70:30, 2-(2'-hydroxy-butyl-5'-methylphenyl)-5-chlorobenzotriazole (HBMCBT), and 2,6-di-butyl-4-methylphenol (BHT) were mixed at a weight ratio of 95:2:3. The 19.8 mg of the resulting mixture was sealed into a tube having an inner diameter of 1.40 mm, a thickness of 0.30 mm and a length of 2.0 cm to obtain a pheromone preparation A. The tube as a container was made of polybutylene adipate succinate (Bionolle #3010 produced by SHOWA DENKO K.K.), which was a biodegradable polymer.

### <Production of Pheromone Preparation B>

The 256.0 mg of a mixture of (Z,E)-9,12-tetradecadienyl acetate and (Z)-9-tetradecenol at a weight ratio of 70:30, 2-(2'-hydroxy-3'-tert-buty-5'-methylphenyl)-5-chlorobenzotriazole (HBMCBT), and 2,6-di-tert-butyl-4-methylphenol (BHT) were mixed at a weight ratio of 95:2:3. The 269mg of the resulting mixture was sealed into a polyethylene tube having an inner diameter of 1.40 mm, a thickness of 0.35 mm and a length of 20.0 cm to obtain a pheromone preparation B. The pheromone preparation B was designed so that the release rates of 5000 pheromone preparations Alha were equivalent to those of 500 pheromone preparations Blha in an environment at 25°C and a wind speed of 0.0 3 m/sec.

### <Release Test of Pheromone Preparation A>

The 30 pheromone preparations A were placed evenly on the soil surface and 30 pheromone preparations A were placed evenly on the surface of the mulching sheet covering the soil surface. Then the residual amounts of pheromone substances were measured with relation to the increase of the number of the elapsed days. Residual ratios of pheromone substances are shown in Table 1. In Table 1, "Z9E12-14: Ac" means (Z,E)-9,12-tetradecadienyl acetate and "9-14: OH" means (Z)-9-tetradecenol.

The residual ratio of the pheromone substance was calculated by randomly collecting 10 pheromone preparations installed on the soil surface and 10 pheromone preparations on the surface of the mulching sheet covering the soil surface after each of 25 days, 60 days and 92 days; extracting the contents of the pheromone preparations by using acetone; analyzing the extract by gas chromatography with an internal standard method; calculating average values based on the values obtained by the analyses.

**Table 1**

| number of days elapsed | | soil surface | | | | mulching sheet surface | | | |
|---|---|---|---|---|---|---|---|---|---|
| | | Z9E12-14:Ac residual ratio (%) | | Z9-14:OH residual ratio (%) | | Z9E12-14:Ac residual ratio (%) | | Z9-14:OH residual ratio (%) | |
| 0 | | 100 | | 100 | | 100 | | 100 | |
| 25 | | 89 | | 90 | | 86 | | 86 | |
| 60 | | 71 | | 70 | | 49 | | 47 | |
| 92 | | 50 | | 46 | | 33 | | 31 | |

As shown in the results in Table 1, even when pheromone preparations were installed on the soil surface or the surface of the mulching sheet covering the soil surface, the pheromone substances could be released over a period of about 3 months. Thus, it is evident that these installations caused no problem in use.

### <Mating Disruption Tests for Beet Armyworm>

### <Examples 1, 2, 3 and 4 and Comparative Example 1>

A mating disruption test was carried out in a field in which pheromone preparations A were installed on a soil surface and a surface of the mulching sheet in each of Examples 1 to 4. On the other hand, a mating disruption test was carried out in a field in which pheromone preparations B were installed at positions about 1 m above the soil surface by tying pheromone preparations B to props in Comparative Example 1. The area ratio of the soil surface to the surface of the mulching sheet on which the pheromone preparations were installed in each of Examples 1 to 4 and Comparative Example 1 was 75:25. All of the pheromone preparations were evenly installed, while putting the preparations down sideways.

In all cases, the field area was about 1 5 ares, and the test period was one night (from about 18:30 to about 6:00). In the field, eggplants, tomatoes, green peppers, sweet peppers, okras, mulukhiyyas, cucumbers, pumpkins, zucchinis, cabbages, soybeans, green onions and asparagus were grown. The ridges for the eggplants, tomatoes, green peppers, sweet peppers, okras and cucumbers were covered with mulching sheets, and some of the pheromone preparations were also installed on the surface of the mulching sheets.

The effect of the mating disruption was evaluated by measuring the mating rate. The mating rate was measured by counting the presence or absence of mating by 16 virgin female beet armyworms whose wings were connected to props with each thin yarn of about 30 cm at positions of about 70 cm above the soil surface in the central part of the field so as not to escape.

The release rates and release amounts of pheromon substances from pheromone preparations A and B at 25°C and a wind speed of 0.03 m/sec, installation densities in field tests, and mating ratios are shown in Table 2.

**Table 2**

| | pheromone preparation | release rate | installation density | release amount | mating ratio |
|---|---|---|---|---|---|
| | - | (mg/day/preparation) | (preparations/ha) | (g/ha/day) | (%) |
| Example 1 | A | 0.088 | 5000 | 0.38 | 0 |
| Example 2 | A | 0.088 | 3000 | 0.23 | 0 |
| Example 3 | A | 0.088 | 1500 | 0.11 | 0 |
| Example 4 | A | 0.088 | 750 | 0.06 | 0 |
| Comp.Ex. 1 | B | 0.883 | 500 | 0.38 | 0 |

The mating ratio in Example 1 was the same as that in Comparative Example 1. Thus, it is confirmed that the effect of mating disruption on the beet armyworm is present even when the pheromone preparations are installed on the soil surface and the surface of the mulching sheet.

The mating rates in Examples 2, 3 and 4 were the same as that in Comparative Example 1. Thus, it is confirmed that sufficient mating disruption can be performed even when the pheromone preparations are installed on the soil surface and the surface of the mulching sheet and the release amounts are made smaller.

Examples of the method for confirming the mating disruption effect include a method of confirming the number of insects attracted to the pheromone traps installed in the field (confirmation of attraction inhibition effect), and a tethered female method of confirming the presence or absence of mating by virgin females after installing them in the field at night and then collecting the females in the next morning (confirmation of mating inhibition effect). Especially, the tethered female method is an effective for directly evaluating the effect on the mating behavior in the natural world because of use of the females themselves. The tethered female method was used for the confirmation of the mating disruption effect in this test.

## Claims

1. A method for controlling a beet army worm, the method comprising a step of installing at least one pheromone preparation comprising a pheromone substance for the beet armyworm and a container containing the pheromone substance therein and allowing the pheromone substance to permeate therethrough, on a soil surface and/or a surface of a material covering a soil surface in a field to release the pheromone substance into the field.

2. The method for controlling a beet armyworm according to claim 1, wherein the pheromone substance is at least one selected from the group consisting of (Z,E)-9,12-tetradecadienyl acetate, (Z)-9-tetradecenol, (Z,E)-9, 12- tetradecadienol, (Z)-9-tetradecenyl acetate, and (Z)-11-hexadecenyl acetate.

3. The method for controlling a beet armyworm according to claim 1 or claim 2, wherein the pheromone substance is released in an amount of from 0.03 to 2 g per hectare per day.

4. The method for controlling a beet armyworm according to any one of claims 1 to 3, wherein the container is a tube having a length of from 0.5 to 100,000 cm.

5. A method for controlling a beet armyworm according to any one of claims 1 to 4, wherein the container is made of a biodegradable polymer.

## Patentansprüche

1. Ein Verfahren zur Bekämpfung eines Rübenheerwurms, wobei das Verfahren einen Schritt des Anbringens mindestens einer Pheromonzubereitung, die eine Pheromonsubstanz für den Rübenheerwurm umfasst, und eines Behälters, der die Pheromonsubstanz darin enthält und es ermöglicht, dass die Pheromonsubstanz diesen durchdringt, auf einer Bodenoberfläche und/oder einer Oberfläche eines Materials, das eine Bodenoberfläche auf einem Feld bedeckt, um die Pheromonsubstanz auf das Feld freizusetzen, umfasst.

2. Das Verfahren zur Bekämpfung eines Rübenheerwurms nach Anspruch 1, wobei die Pheromonsubstanz mindestens eine, ausgewählt aus der Gruppe bestehend aus (Z,E)-9,12-Tetradecadienylacetat, (Z)-9-Tetradecenol, (Z,E)-9,12-Tetradecadienol, (Z)-9-Tetradecenylacetat und (Z)-11-Hexadecenylacetat, ist.

3. Das Verfahren zur Bekämpfung eines Rübenheerwurms nach Anspruch 1 oder Anspruch 2, wobei die Pheromonsubstanz in einer Menge von 0,03 bis 2 g pro Hektar pro Tag freigesetzt wird.

4. Das Verfahren zur Bekämpfung eines Rübenheerwurms nach einem der Ansprüche 1 bis 3, wobei der Behälter ein Rohr mit einer Länge von 0,5 bis 100.000 cm ist.

5. Ein Verfahren zur Bekämpfung eines Rübenheerwurms nach einem der Ansprüche 1 bis 4, wobei der Behälter aus einem biologisch abbaubaren Polymer besteht.

## Revendications

1. Procédé de lutte contre la légionnaire de la betterave, le procédé comprenant une étape consistant à installer au moins une préparation de phéromone comprenant une substance de phéromone pour la légionnaire de la betterave et un récipient contenant la substance de phéromone à l'intérieur de celui-ci et à permettre à la substance de phéromone de pénétrer à travers celui-ci, sur une surface de sol et/ou une surface d'un matériau recouvrant une surface de sol dans un champ pour libérer la substance de phéromone dans le champ.

2. Procédé de lutte contre la légionnaire de la betterave selon la revendication 1, dans lequel la substance de phéromone est au moins une sélectionnée dans le groupe consistant en l'acétate de (Z,E)-9,12-tétradécadiènyle, le (Z)-9-tétradécènol, le (Z,E)-9,12-tétradécadiènol, l'acétate de (Z)-9-tétradécènyle, et l'acétate de (Z)-11-hexadécènyle.

3. Procédé de lutte contre la légionnaire de la betterave selon la revendication 1 ou la revendication 2, dans lequel la substance de phéromone est libérée en une quantité de 0,03 à 2 g par hectare et par jour.

4. Procédé de lutte contre la légionnaire de la betterave selon l'une quelconque des revendications 1 à 3, dans lequel le récipient est un tube ayant une longueur de 0,5 à 100 000 cm.

5. Procédé de lutte contre la légionnaire de la betterave selon l'une quelconque des revendications 1 à 4, dans lequel le récipient est fait d'un polymère biodégradable.
